(19) Europäisches Patentamt / European Patent Office / Office européen des brevets

(11) **EP 4 700 344 A1**

(12) **EUROPEAN PATENT APPLICATION**
published in accordance with Art. 153(4) EPC

(43) Date of publication:
**25.02.2026 Bulletin 2026/09**

(21) Application number: **24811159.3**

(22) Date of filing: **23.05.2024**

(51) International Patent Classification (IPC):
*G01H 17/00* (2006.01)    *G01M 99/00* (2011.01)

(52) Cooperative Patent Classification (CPC):
**G01H 17/00; G01M 99/00**

(86) International application number:
**PCT/JP2024/018926**

(87) International publication number:
**WO 2024/242153 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.05.2023 JP 2023085152**

(71) Applicant: **JFE Steel Corporation
Tokyo, 100-0011 (JP)**

(72) Inventors:
• **MAEDA, Takafumi**
  **Tokyo 100-0011 (JP)**
• **HIRATA, Takehide**
  **Tokyo 100-0011 (JP)**

(74) Representative: **Hoffmann Eitle
Patent- und Rechtsanwälte PartmbB
Arabellastraße 30
81925 München (DE)**

(54) **ACOUSTIC DIAGNOSIS DEVICE AND ACOUSTIC DIAGNOSIS METHOD**

(57) An acoustic diagnosis device according to the present invention includes: an operational sound collecting unit that collects operational sound of the equipment; an in-operational-segment operational sound extracting unit that collects an image indicating an operational state of the equipment, detects predetermined operational segments of the equipment using the collected image, and extracts operational sound for each of the operational segments detected from the operational sound collected by the operational sound collecting unit; a sound pressure level acquiring unit that acquires a sound pressure level for each of predetermined frequency bands for each of the operational segments with respect to operational sound for each of the operational segments extracted by the in-operational-segment operational sound extracting unit; a degree-of-deviation calculating unit that calculates a degree of deviation of the sound pressure level for each of the operational segments and each of the frequency bands acquired by the sound pressure level acquiring unit from a sound pressure level of the same equipment, a same operational segment, and a same frequency band during normal operation; and an abnormal part specifying unit that specifies an abnormal part of the equipment on a basis of the degree of deviation calculated by the degree-of-deviation calculating unit.

FIG.1

## Description

Field

The present invention relates to an acoustic diagnosis device and an acoustic diagnosis method for specifying an abnormal part of equipment using an acoustic signal during operation of the equipment.

Background

Patent Literature 1 describes a diagnostic device that performs diagnosis on a diagnosis target by comparing an observed waveform observed from the diagnosis target with a reference waveform. Patent Literature 2 describes a state estimation device that estimates a change in the state of equipment on the basis of a waveform and frequency information detected by a plurality of sensors provided in the equipment. Patent Literature 3 describes a diagnostic device that detects chattering of a rolling roll using the frequency of an acoustic signal detected by an acoustic sensor provided in a rolling mill.

Citation List

Patent Literature

       Patent Literature 1: JP 2008-164490 A
       Patent Literature 2: WO 2019/017345 A
       Patent Literature 3: WO 2020/157818 A

Summary

Technical Problem

In the devices described in Patent Literatures 1 to 3, particularly for equipment including a plurality of components, there is a possibility that an abnormal part of the equipment cannot be accurately specified.
Specifically, in a case where the equipment includes a plurality of components such as a bearing, a reducer, a crank, a mold, a roll, and a block, the timing at which operational sound is generated varies depending on the component. Therefore, unless the timing and the frequency at which the abnormal sound has been generated are taken into consideration, it is not possible to know from which component the abnormal sound has been generated, and there is a possibility that an abnormal part of the equipment cannot be accurately specified.
The present invention has been made to solve the above problem, and an object thereof is to provide an acoustic diagnosis device and an acoustic diagnosis method capable of accurately specifying an abnormal part of equipment.

Solution to Problem

To solve the problem and achieve the object, an acoustic diagnosis device according to the present invention is the device that specifies an abnormal part of equipment using an acoustic signal during operation of the equipment. The acoustic diagnosis device includes: an operational sound collecting unit that collects operational sound of the equipment; an in-operational-segment operational sound extracting unit that collects an image indicating an operational state of the equipment, detects predetermined operational segments of the equipment using the collected image, and extracts operational sound for each of the operational segments detected from the operational sound collected by the operational sound collecting unit; a sound pressure level acquiring unit that acquires a sound pressure level for each of predetermined frequency bands for each of the operational segments with respect to operational sound for each of the operational segments extracted by the in-operational-segment operational sound extracting unit; a degree-of-deviation calculating unit that calculates a degree of deviation of the sound pressure level for each of the operational segments and each of the frequency bands acquired by the sound pressure level acquiring unit from a sound pressure level of the same equipment, a same operational segment, and a same frequency band during normal operation; and an abnormal part specifying unit that specifies an abnormal part of the equipment on a basis of the degree of deviation calculated by the degree-of-deviation calculating unit.
Moreover, the in-operational-segment operational sound extracting unit may detect a predetermined operational segment of the equipment by using an image indicating an operational state of the equipment by inputting the image indicating the operational state of the equipment acquired using an image sensor to an artificial intelligence model in which the image indicating the operational state of the equipment may be used as input data and an operational state of the equipment indicated by the image may be used as output data.

Moreover, the sound pressure level acquiring unit may acquire the sound pressure level by classifying each of operational sounds on a basis of predetermined operating conditions of the equipment, and the degree-of-deviation calculating unit may calculate the degree of deviation of the sound pressure level for each of the operational segments, each of the frequency bands, and each of the operating conditions acquired by the sound pressure level acquiring unit from a sound pressure level of the same equipment, the same operational segment, the same frequency band, and a same operating condition during the normal operation.

Moreover, the acoustic diagnosis device may further include a database unit that stores: an extraction condition for the operational sound of the equipment; and data necessary for specifying the abnormal part of the equipment, wherein the abnormal part specifying unit may specify the abnormal part of the equipment on a basis of a pattern of deviations stored in the database unit, the pattern of deviations including, as an element, a degree of deviation in each frequency band obtained for each of the operational segments.

Moreover, the acoustic diagnosis device may further include: a normal sound pressure level acquiring unit that acquires a sound pressure level for each of predetermined frequency bands for each of the operational segments with respect to the operational sound for each of the operational segments extracted by the in-operational-segment operational sound extracting unit; and a normal distribution determining and recording unit that classifies the sound pressure level acquired by the normal sound pressure level acquiring unit for each of the equipment, each of the operational segments, and each of the frequency bands and records the classified sound pressure level as a sound pressure level during the normal operation of the equipment.

Moreover, the normal distribution determining and recording unit may record, for each of the equipment, a table including information indicating a relationship between: the pattern of deviations; and the abnormal parts of the equipment, the pattern of deviations having, as an element, a degree of deviation of a sound pressure level from the sound pressure level during the normal operation in each of the frequency bands obtained for each of the operational segments.

Moreover, the normal distribution determining and recording unit may record a table including information indicating a relationship between: the operational segments, the pattern of deviations, and the operating conditions of the equipment; and the abnormal parts of the equipment.

Moreover, an acoustic diagnosis method according to the present invention is the method for specifying an abnormal part of equipment using an acoustic signal during operation of the equipment. The acoustic diagnosis method includes: an operational sound collecting step of collecting operational sound of the equipment; an in-operational-segment operational sound extracting step of collecting an image indicating an operational state of the equipment, detecting predetermined operational segments of the equipment using the collected image, and extracting operational sound for each of the operational segments detected from the operational sound collected in the operational sound collecting step; a sound pressure level acquiring step of acquiring a sound pressure level for each of predetermined frequency bands for each of the operational segments with respect to operational sound for each of the operational segments extracted in the in-operational-segment operational sound extracting step; a degree-of-deviation calculating step of calculating a degree of deviation of the sound pressure level for each of the operational segments and each of the frequency bands acquired in the sound pressure level acquiring step from a sound pressure level of the same equipment, a same operational segment, and a same frequency band during normal operation; and an abnormal part specifying step of specifying an abnormal part of the equipment on a basis of the degree of deviation calculated in the degree-of-deviation calculating step.

Moreover, the acoustic diagnosis method may further include: a normal sound pressure level acquiring step of acquiring a sound pressure level for each of predetermined frequency bands for each of the operational segments with respect to the operational sound for each of the operational segments extracted in the in-operational-segment operational sound extracting step; and a normal distribution determining and recording step of classifying the sound pressure level acquired in the normal sound pressure level acquiring step for each of the equipment, each of the operational segments, and each of the frequency bands and recording the classified sound pressure level as a sound pressure level during the normal operation of the equipment.

Moreover, the in-operational-segment operational sound extracting step may include a step of detecting a predetermined operational segment of the equipment by using an image indicating an operational state of the equipment by inputting the image indicating the operational state of the equipment acquired using an image sensor to an artificial intelligence model in which the image indicating the operational state of the equipment may be used as input data and an operational state of the equipment indicated by the image may be used as output data.

Advantageous Effects of Invention

According to an acoustic diagnosis device and an acoustic diagnosis method according to the present invention, an abnormal part of equipment is specified on the basis of the sound pressure level for each operational segment and each frequency band of the equipment, and thus the abnormal part of the equipment can be accurately specified.

Brief Description of Drawings

FIG. 1 is a block diagram illustrating the configuration of an acoustic diagnosis device as an embodiment of the present invention.

FIG. 2 is a flowchart illustrating the flow of data recording processing as an embodiment of the present invention.

FIG. 3 is a diagram for describing data recording processing according to an embodiment of the present invention.

FIG. 4 is a diagram for describing data recording processing according to an embodiment of the present invention.

FIG. 5 is a diagram for describing data recording processing according to an embodiment of the present invention.

FIG. 6 is a flowchart illustrating the flow of abnormal part specifying processing as an embodiment of the present invention.

FIG. 7 includes tables for explaining a specific example of the abnormal part specifying processing according to an embodiment of the present invention.

FIG. 8 is a diagram for explaining abnormal part specifying processing of an example.

FIG. 9 includes graphs illustrating a frequency distribution of sound pressure levels in a case where operating conditions of press equipment are limited and in a case where the operating conditions are not limited. Description of Embodiments

Hereinafter, an acoustic diagnosis device and an acoustic diagnosis method as embodiments of the present invention will be described with reference to the drawings.

[Configuration]

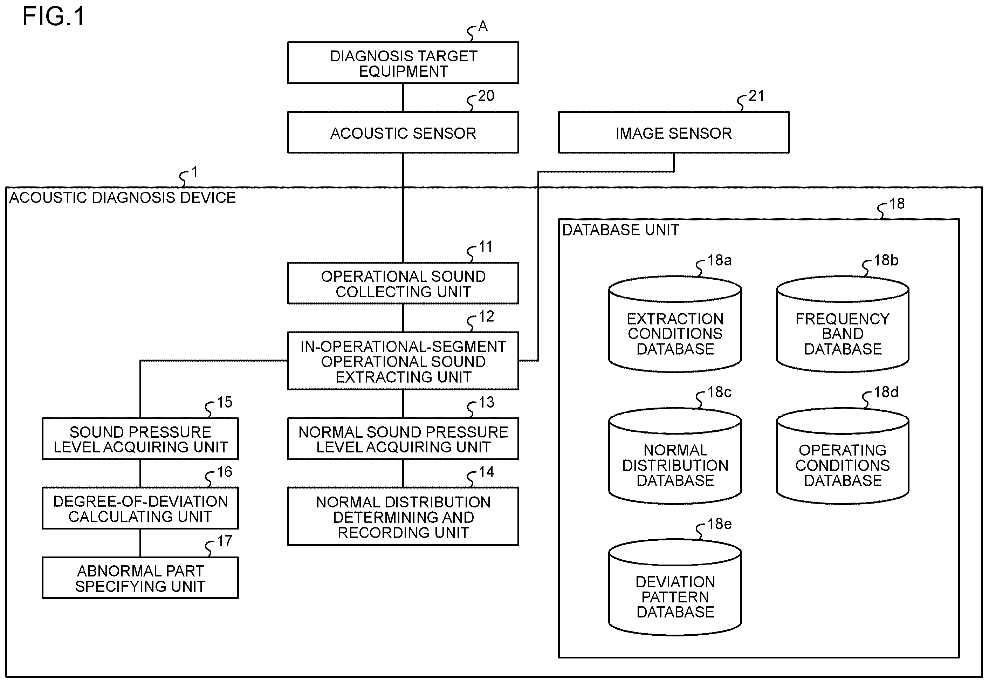

FIG. 1 is a block diagram illustrating the configuration of an acoustic diagnosis device as an embodiment of the present invention. As illustrated in FIG. 1, an acoustic diagnosis device 1 as an embodiment of the present invention is a device that specifies an abnormal part of one or more pieces of diagnosis target equipment (hereinafter, abbreviated as equipment) A determined in advance using an acoustic signal at the time of operation of the equipment A, and includes an information processing device such as a computer. Note that the equipment A includes a plurality of components, and examples of such equipment include steel manufacturing equipment such as press equipment and rolling equipment.

The acoustic diagnosis device 1 includes an operational sound collecting unit 11, an in-operational-segment operational sound extracting unit 12, a normal sound pressure level acquiring unit 13, a normal distribution determining and recording unit 14, a sound pressure level acquiring unit 15, a degree-of-deviation calculating unit 16, an abnormal part specifying unit 17, and a database unit 18. The operational sound collecting unit 11, the in-operational-segment operational sound extracting unit 12, the normal sound pressure level acquiring unit 13, the normal distribution determining and recording unit 14, the sound pressure level acquiring unit 15, the degree-of-deviation calculating unit 16, and the abnormal part specifying unit 17 are functional blocks implemented by an arithmetic processing device such as a CPU inside the information processing device executing a computer program. The function of each of the units will be described later.

The database unit 18 includes a storage device such as an HDD included in the information processing device, and includes an extraction conditions database 18a, a frequency band database 18b, a normal distribution database 18c, an operating conditions database 18d, and a deviation pattern database 18e. Details of each of the databases will be described later. Note that the database unit 18 may be disposed outside the acoustic diagnosis device 1, and the acoustic diagnosis device 1 may acquire data from the database unit 18 via an electric communication line.

The acoustic diagnosis device 1 having such a configuration specifies an abnormal part of the equipment A by executing data recording processing and abnormal part specifying processing described below. Hereinafter, the operation of the acoustic diagnosis device 1 when executing the data recording processing and the abnormal part specifying processing will be described.

[Data Recording Processing]

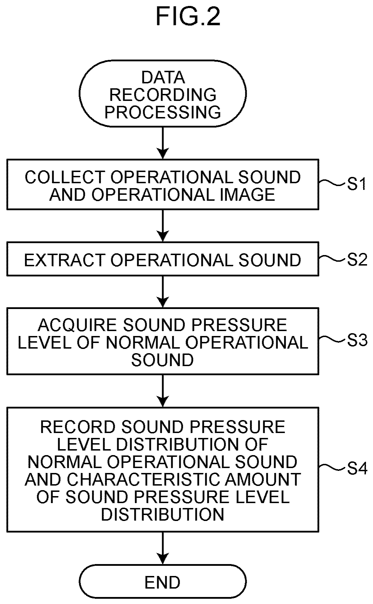

FIG. 2 is a flowchart illustrating the flow of data recording processing as an embodiment of the present invention. The flowchart illustrated in FIG. 2 starts at the timing when an execution command of the data recording processing is input to the acoustic diagnosis device 1, and the data recording processing proceeds to processing of step S1.

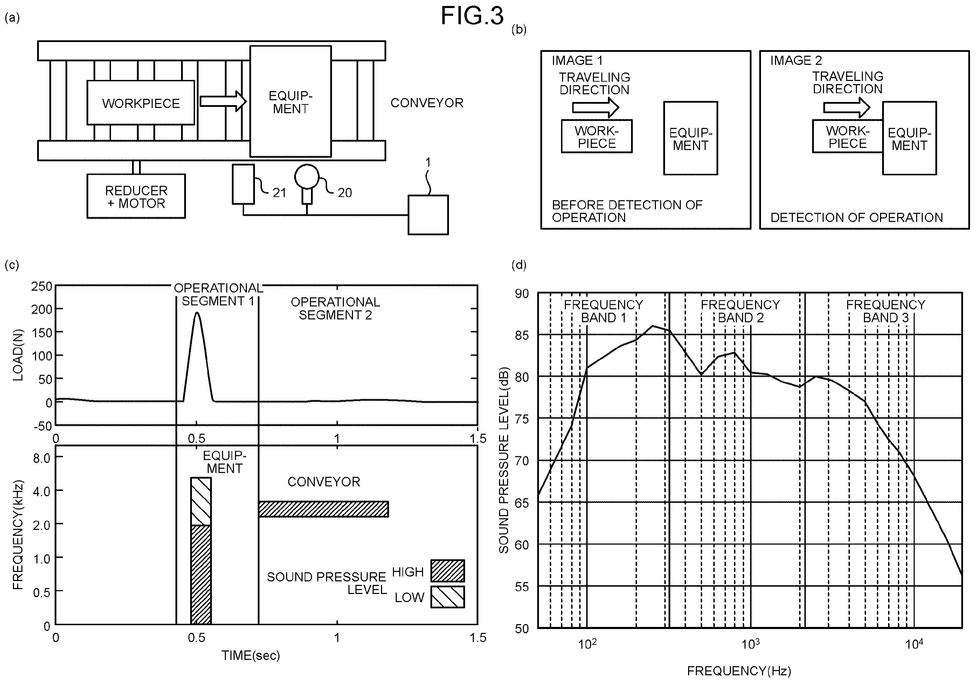

In the processing of step S1, the operational sound collecting unit 11 collects a sound pressure signal of the operational sound of the equipment A in normal operation at predetermined time intervals using j (j ≥ 1) types of acoustic sensors 20 such as a microphone installed in the vicinity of the equipment A. In addition, the in-operational-segment operational sound extracting unit 12 collects an image of the equipment A in normal operation using an image sensor 21 such as a camera disposed in the vicinity of the equipment A. For example, in the example illustrated in FIG. 3(a), when a workpiece is carried by a conveyor to equipment and processed, the operational sound collecting unit 11 collects operational sound of the equipment and the conveyor, and the in-operational-segment operational sound extracting unit 12 collects images of the equipment and the conveyor including the workpiece. As a result, the processing of step S1 is completed, and the data recording processing proceeds to processing of step S2.

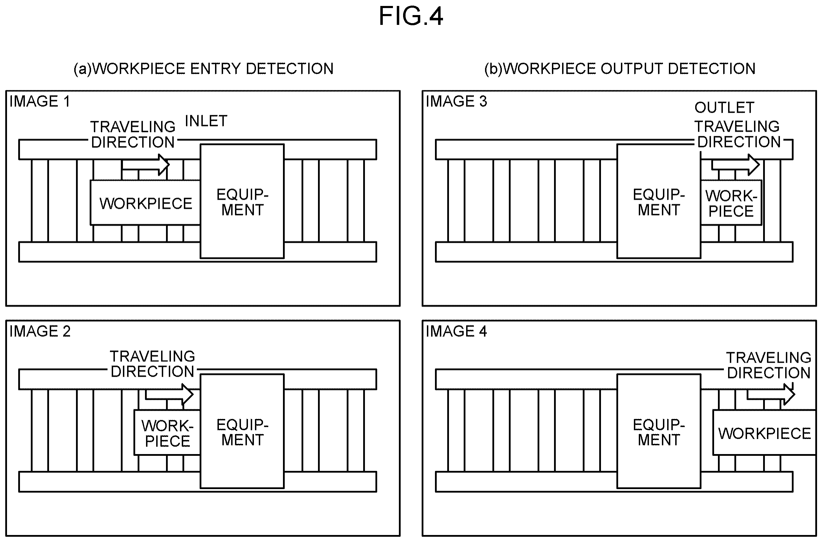

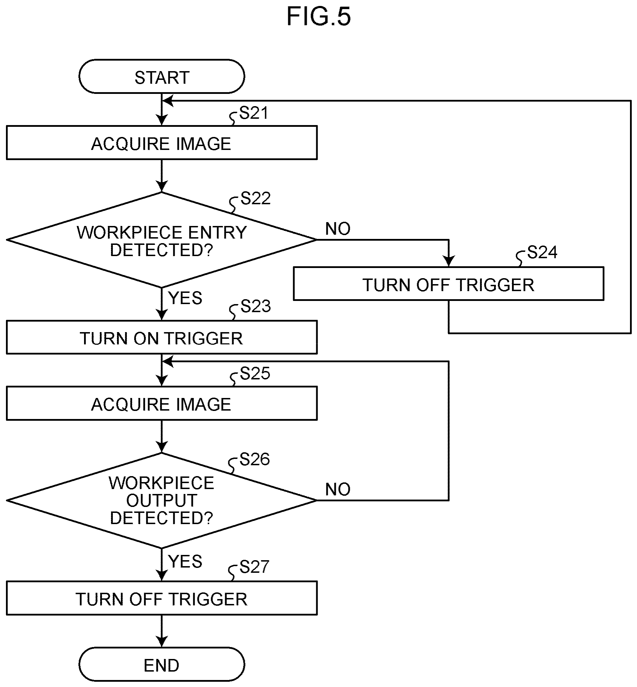

In the processing of step S2, the in-operational-segment operational sound extracting unit 12 detects start times and end times of k types ($k \geq 1$) of operational segments of the equipment A determined in advance using the image of the equipment A in normal operation collected in the processing of step S1 (operational segment detection processing). For example, in the example illustrated in FIG. 3(b), the in-operational-segment operational sound extracting unit 12 detects the time when the workpiece enters the equipment using the images collected using the image sensor 21. Details of the operational segment detection processing will be described later with reference to FIGS. 4 and 5. Then, the in-operational-segment operational sound extracting unit 12 extracts the sound pressure signal for each operational segment from the sound pressure signal collected in the processing of step S1 on the basis of the detected start times and end times of the operational segments. For example, in the example illustrated in FIG. 3(c), on the basis of the time when the workpiece enters the equipment and the time when the workpiece leaves the equipment, the in-operational-segment operational sound extracting unit 12 extracts the sound pressure signal for an operational segment 1, which is a segment for $t_1$ seconds from the time when the workpiece has entered the equipment, and for an operational segment 2, which is a segment for a predetermined period of time from the time when the workpiece has left the equipment. As a result, the processing of step S2 is completed, and the data recording processing proceeds to processing of step S3.

In the processing of step S3, first, the normal sound pressure level acquiring unit 13 converts the sound pressure signal for each operational segment extracted in the processing of step S2 into a sound pressure level with respect to the frequency using Fourier transform, an octave band filter, or the like. Next, the normal sound pressure level acquiring unit 13 reads, from the frequency band database 18b, information regarding 1 types ($1 \geq 1$) of frequency bands (minimum value, maximum value, and the like of the frequency) to be used for abnormality detection predetermined for each operational segment. Then, the normal sound pressure level acquiring unit 13 acquires the sound pressure level (sound pressure level of normal operational sound) for each of the 1 types of frequency bands from the data of the converted sound pressure level using a bandpass filter or the like. For example, in the example illustrated in FIG. 3(d), the normal sound pressure level acquiring unit 13 acquires the sound pressure level of the normal operational sound for each of predetermined frequency bands 1 to 3. As a result, the processing of step S3 is completed, and the data recording processing proceeds to processing of step S4.

In the processing of step S4, the normal distribution determining and recording unit 14 classifies the sound pressure level of the normal operational sound acquired in the processing of step S3 for each operational segment and each frequency band and records the data of the sound pressure level distribution of the normal operational sound and the characteristic amount (average value, standard deviation, or the like) thereof in the normal distribution database 18c. As a result, the processing of step S4 is completed, and the series of data recording processing ends.

[Operational Segment Detection Processing]

In the operational segment detection processing in the processing of step S2 described above, the in-operational-segment operational sound extracting unit 12 determines start times and end times of the k types of operational segments of the equipment A determined in advance by using the artificial intelligence model trained using the image collected by the image sensor 21. Here, the artificial intelligence model is a learning model in which the image collected by the image sensor 21 is used as input data and an operational state of the equipment A indicated by the image is used as output data. The artificial intelligence model is generated by causing the model to learn a set of result data of the image collected by the image sensor 21 and data of the operational state of the equipment A indicated by the image as training data. The artificial intelligence model may be any model as long as the model can be used for image determination such as deep learning and machine learning.

For example, in a case where the time when the workpiece enters the equipment (workpiece entry detection) and the time when the workpiece leaves the equipment (workpiece output detection) are determined using the image collected using the image sensor 21, an image in which both the workpiece and the equipment are captured in one image is selected as the image to be collected by the image sensor 21. FIGS. 4(a) and 4(b) illustrate examples of images (images 1 and 2) of the workpiece input detection and images (images 3 and 4) of the workpiece output detection. As illustrated in FIG. 4(a), images of the moment at which the workpiece enters the equipment or the state in which the workpiece has entered the equipment and advanced are also used for training with regards to the time at which the workpiece enters the equipment. In addition, as illustrated in FIG. 4(b), images of the moment at which the workpiece leaves the equipment or the state in which the workpiece has left the equipment and has advanced are also used for training with regards to the time at which the workpiece leaves the equipment.

FIG. 5 illustrates an example of the flow of processing by the in-operational-segment operational sound extracting unit 12 from image acquisition of the equipment A to the workpiece input detection and the workpiece output detection. As illustrated in FIG. 5, the in-operational-segment operational sound extracting unit 12 acquires images using the image sensor 21 and inputs the acquired image data into the artificial intelligence model (step S21). Then, if the artificial intelligence model outputs an operational state in which the workpiece has entered the equipment (step S22: Yes), the in-operational-segment operational sound extracting unit 12 turns on the trigger (step S23). On the other hand, if the artificial intelligence model does not output the operational state in which the workpiece has entered the equipment (step S22: No), the in-operational-segment operational sound extracting unit 12 turns off the trigger (step S24) and executes the processing of step S21 again.

In a case where the trigger is turned on in the processing of step S23, the in-operational-segment operational sound extracting unit 12 acquires an image using the image sensor 21 and inputs the acquired image data to the artificial intelligence model (step S25). Then, if the artificial intelligence model outputs the operational state in which the workpiece has left the equipment (step S26: Yes), the in-operational-segment operational sound extracting unit 12 turns off the trigger (step S27). As a result, the time when the workpiece enters the equipment A and the time when the workpiece leaves the equipment A can be detected on the basis of the time when the trigger is turned on and off, respectively. On the other hand, if the artificial intelligence model does not output the operational state in which the workpiece has left the equipment (step S26: No), the in-operational-segment operational sound extracting unit 12 executes the processing of step S25 again.

[Abnormal Part Specifying Processing]

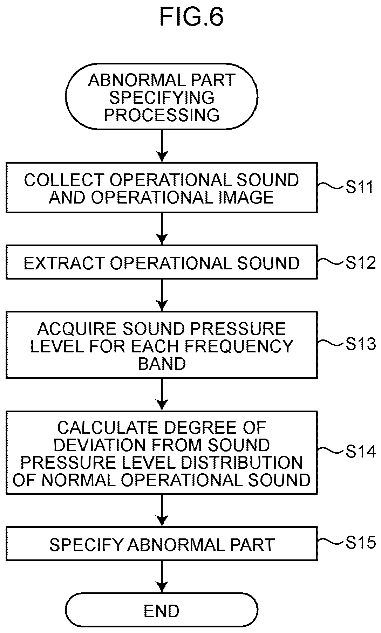

FIG. 6 is a flowchart illustrating the flow of abnormal part specifying processing as an embodiment of the present invention. The flowchart illustrated in FIG. 6 starts at the timing when an execution command of the abnormal part specifying processing is input to the acoustic diagnosis device 1, whereby the abnormal part specifying processing proceeds to processing of step S11.

In the processing of step S11, the operational sound collecting unit 11 collects the sound pressure signal of the operational sound of the equipment A within a predetermined period including k types (k ≥ 1) of operational segments of the equipment A having been classified in advance using an acoustic sensor 20 installed in the vicinity of the equipment A at predetermined time intervals. In addition, the in-operational-segment operational sound extracting unit 12 collects an image of the equipment A in normal operation using the image sensor 21. As a result, the processing of step S11 is completed, and the abnormal part specifying processing proceeds to processing of step S12.

In the processing of step S12, the in-operational-segment operational sound extracting unit 12 detects start times and end times of k types (k ≥ 1) of operational segments of the equipment A determined in advance using the image of the equipment A in normal operation collected in the processing of step S11. Then, the in-operational-segment operational sound extracting unit 12 extracts the sound pressure signal for each of the k types of operational segments from the sound pressure signal collected in the processing of step S11 on the basis of the detected start times and end times of the operational segments. Since the flow of the processing of step S12 is the same as the flow of the processing of step S2 described above, a detailed description thereof will be omitted. As a result, the processing of step S12 is completed, and the abnormal part specifying processing proceeds to processing of step S13.

In the processing of step S13, the sound pressure level acquiring unit 15 acquires the sound pressure level for each of the k types of operational segments and each of the l types of frequency bands from the sound pressure signal of the operational sound extracted in the processing of step S12. Since the flow of the processing of step S13 is the same as the flow of the processing of step S3 described above, a detailed description thereof will be omitted. Note that the sound pressure level acquiring unit 15 may read information regarding m types of operating conditions that affect the operation of the equipment A from the operating conditions database 18d and acquire the sound pressure level for each of the k types of operational segments, each of the l types of frequency bands, and for each of the m types of operating conditions. As a result, the processing of step S13 is completed, and the abnormal part specifying processing proceeds to processing of step S14.

In the processing of step S14, the degree-of-deviation calculating unit 16 reads information regarding the sound pressure level distribution during normal operation and the characteristic amount thereof from the normal distribution database 18c for each of the k types of operational segments of the equipment A and each of the l types of frequency bands. Next, using the read information, the degree-of-deviation calculating unit 16 calculates two or more degrees of deviation of the sound pressure level of the operational sound acquired in the processing of step S13 with respect to the sound pressure level during the normal operation for each of the k types of operational segments and each of the l types of frequency bands. Then, the degree-of-deviation calculating unit 16 determines whether the equipment A is normal (0) or abnormal (1) using the calculated degrees of deviation for each of the degrees of deviation and generates an array pattern vector of the determination result (0 or 1) in each operational segment as a deviation pattern.

In a case where the m types of operating conditions are taken into consideration in the processing of step S13, the degree-of-deviation calculating unit 16 calculates the degree of deviation with reference to a data table as illustrated in Table 1 below. The data table shown in Table 1 below indicates information regarding the sound pressure level distribution during normal operation and the characteristic amount thereof for each of the k types of operational segments, each of the 1 types of frequency bands, and each of the m types of operating conditions. The data table illustrated in Table 1 below corresponds to the content of the extraction conditions database 18a, the frequency band database 18b, the normal distribution database 18c, and the operating conditions database 18d. As a result, the processing of step S14 is completed, and the abnormal part specifying processing proceeds to processing of step S15.

(Table 1)

| Operational Segment | | Frequency Band | | Operating Conditions | | | Sound Pressure Level Distribution of Associated Normal Operational Sound | |
|---|---|---|---|---|---|---|---|---|
| Segment Number | Operational Segment | Frequency Number | Frequency Band | Conditions Number | Steel Type | Amount of Pressure Drop | Average Value | Standard Deviation |
| 1 | $t_1$ Seconds after Workpiece Detection | 1 | $f_{11}$ TO $f_{12}$Hz | 1 | A | $S_{11}$ TO $S_{12}$ | $\overline{X}1$ | $\sigma1$ |
| 1 | $t_1$ Seconds after Workpiece Detection | 1 | $f_{11}$ TO $f_{12}$Hz | 2 | A | $S_{12}$ TO $S_{13}$ | $\overline{X}2$ | $\sigma2$ |
| 1 | $t_1$ Seconds after Workpiece Detection | 1 | $f_{11}$ TO $f_{12}$Hz | 3 | A | $S_{13}$ TO $S_{14}$ | $\overline{X}3$ | $\sigma3$ |
| 1 | ... | 1 | ... | ... | ... | ... | ... | ... |
| 1 | ... | 1 | ... | m | ... | ... | $\overline{x}m$ | $\sigma m$ |
| 1 | ... | ... | ... | ... | ... | ... | ... | ... |
| 1 | ... | $\ell$ | $f_{\ell1}$TO$f_{\ell2}$Hz | 1 | A | $S_{11}$ TO $S_{12}$ | $\overline{X}1$ | $\sigma1$ |
| 1 | ... | $\ell$ | $f_{\ell1}$TO$f_{\ell2}$Hz | 2 | A | $S_{12}$ TO $S_{13}$ | $\overline{X}2$ | $\sigma2$ |
| 1 | ... | $\ell$ | $f_{\ell1}$TO$f_{\ell2}$Hz | 3 | A | $S_{13}$ TO $S_{14}$ | $\overline{x}3$ | $\sigma3$ |
| 1 | ... | $\ell$ | ... | ... | ... | ... | ... | ... |
| 1 | ... | $\ell$ | ... | m | ... | ... | $\overline{x}m$ | $\sigma m$ |
| ... | ... | ... | ... | ... | ... | ... | ... | ... |
| k | $t_k$ Seconds after Workpiece Detection | $\ell$ | $f_{\ell1}$TO$f_{\ell2}$Hz | 1 | A | $S_{11}$ TO $S_{12}$ | $\overline{x}1$ | $\sigma1$ |
| k | $t_k$ Seconds after Workpiece Detection | $\ell$ | $f_{\ell1}$TO$f_{\ell2}$Hz | 2 | A | $S_{12}$ TO $S_{13}$ | $\overline{x}2$ | $\sigma2$ |
| k | $t_k$ Seconds after Workpiece Detection | $\ell$ | $f_{\ell1}$TO$f_{\ell2}$Hz | 3 | A | $S_{13}$ TO $S_{14}$ | $\overline{x}3$ | $\sigma3$ |

(continued)

| Operational Segment | | Frequency Band | | Operating Conditions | | | Sound Pressure Level Distribution of Associated Normal Operational Sound | |
|---|---|---|---|---|---|---|---|---|
| Segment Number | Operational Segment | Frequency Number | Frequency Band | Conditions Number | Steel Type | Amount of Pressure Drop | Average Value | Standard Deviation |
| k | $t_k$ Seconds after Work-piece De-tection | $\ell$ | ... | ... | ... | ... | ... | ... |
| k | $t_k$ Seconds after Work-piece De-tection | $\ell$ | ... | m | ... | ... | $\overline{x}m$ | $\sigma m$ |

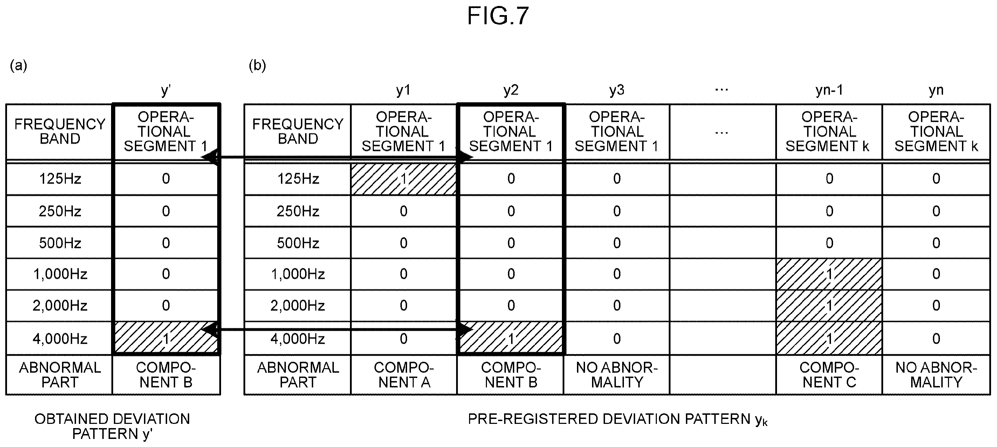

In the processing of step S15, the abnormal part specifying unit 17 specifies an abnormal part of the equipment A on the basis of the deviation pattern y' generated in the processing of step S14. Specifically, as illustrated in FIGS. 7(a) and 7(b), the abnormal part specifying unit 17 searches for a deviation pattern $y_k$ similar to the deviation pattern y' from a data table indicating the relationship between operational segments and the deviation pattern $y_k$ registered in advance in the deviation pattern database 18e and an abnormal part of the equipment A. The data table illustrated in FIG. 7(b) records the deviation pattern obtained when an abnormality of the equipment occurs, and is organized in association with the abnormal part. This data table is created in advance and stored in the deviation pattern database 18e by the normal distribution determining and recording unit 14. In addition, the data table can be structured to specify an abnormal part on the basis of deviation patterns in consideration of m types of operating conditions in addition to the classification for each of the k types of operational segments and each of the 1 types of frequency bands. Therefore, the abnormal part specifying unit 17 may specify an abnormal part of the equipment A further in consideration of the m types of operating conditions.

Note that the abnormal part specifying unit 17 desirably calculates the similarity of the deviation pattern y' to the deviation pattern $y_k$ using the Euclidean distance as expressed in the following Equation (1) and searches for the similar deviation pattern $y_k$ on the basis of the calculated similarity. The value of the degree of similarity expressed by Equation (1) approaches 1 as the deviation pattern y' is more similar to the deviation pattern $y_k$. Then, the abnormal part specifying unit 17 reads information regarding an abnormal part of the equipment A corresponding to the searched deviation pattern $y_k$. For example, in the example illustrated in FIGS. 7(a) and 7(b), since the deviation pattern y' generated in the processing of step S14 coincides with a deviation pattern $y_2$, the abnormal part specifying unit 17 specifies a component B corresponding to the deviation pattern $y_2$ as an abnormal part of the equipment A. As a result, the processing of step S15 is completed, and the series of abnormal part specifying processing ends.

$$\text{Similarity} = \frac{1}{1 + |y' - y_k|} \qquad \cdots (1)$$

As is clear from the above description, the acoustic diagnosis device 1 according to the embodiment of the present invention includes: the operational sound collecting unit 11 that collects operational sound of the equipment A; the in-operational-segment operational sound extracting unit 12 that collects an image indicating an operational state of the equipment A using the image sensor 21, detects predetermined operational segments of the equipment A using the collected image of the equipment A, and extracts operational sound for each of the operational segments detected from the operational sound collected by the operational sound collecting unit 11; the sound pressure level acquiring unit 15 that acquires a sound pressure level for each of predetermined frequency bands for each of the operational segments with respect to operational sound for each of the operational segments extracted by the in-operational-segment operational sound extracting unit 12; the degree-of-deviation calculating unit 16 that calculates a degree of deviation of the sound pressure level for each of the operational segments and each of the frequency bands acquired by the sound pressure level acquiring unit 15 from a sound pressure level of the same equipment, the same operational segment, and the same frequency band during normal operation; and the abnormal part specifying unit 17 that specifies an abnormal part of the equipment on the basis of the degree of deviation calculated by the degree-of-deviation calculating unit 16. According to such a configuration, an abnormal part of the equipment A is specified on the basis of the sound pressure level for each operational segment and each frequency band of the equipment A, and thus the abnormal part of the equipment A can be accurately specified. In addition, since the operational segments of the equipment A are detected using the image sensor 21, the acoustic diagnosis device 1 can operate alone. In addition, this makes it possible to take measures such as quick adjustment and/or repair or replacement processing of the abnormal part, whereby it is possible to suppress deterioration in the quality and quality defects of the manufactured product. This can also contribute to improvement of the product yield.

The acoustic diagnosis device 1 according to an embodiment of the present invention further includes: the normal sound pressure level acquiring unit 13 that acquires the sound pressure level for each of predetermined frequency bands for each of the operational segments with respect to the operational sound of each of the operational segments in normal operation of the equipment A that has been extracted by the in-operational-segment operational sound extracting unit 12; and the normal distribution determining and recording unit 14 that classifies the sound pressure level acquired by the normal sound pressure level acquiring unit 13 for each piece of equipment, each of the operational segments, and each of the frequency bands and records the classified sound pressure level as the sound pressure level during the normal operation of the equipment A and records the table in which the deviation patterns and abnormal parts are associated with each other for each of the operational segments and for each of the frequency bands, the deviation patterns and the abnormal parts obtained when abnormalities of the equipment A have occurred. According to such a configuration, with respect to the operational sound during the normal operation of the equipment A, the sound pressure level for each piece of equipment, each operational segment, and each frequency band, as well as the table in which deviation patterns obtained when abnormalities have occurred and abnormal parts are associated with each other is recorded. As a result, even when the normal operational sound is changed, the recording processing is newly performed on the normal operational sound, and the abnormal part of the equipment A is specified based on the sound pressure level for each operational segment and each frequency band with reference to the new operational sound data during normal operation, so that the abnormal part of the equipment A can be specified with high accuracy. In addition, since the operational segments of the equipment A are detected using the image sensor 21, the acoustic diagnosis device 1 can operate alone.

In addition, since the acoustic diagnosis device 1 according to an embodiment of the present invention specifies an abnormal part of the equipment A also in consideration of the operating conditions of the equipment A, it is possible to accurately specify the abnormal part of the equipment A. That is, in general, in steel manufacturing equipment such as press equipment and rolling equipment, operating conditions such as the rolling amount and the material change even during normal operation, and accordingly, the magnitude and the frequency of the operational sound vary. For this reason, the normal range of the magnitude and the frequency of the operational sound is widened, and the magnitude and the frequency of the abnormal sound are buried in the normal range. As a result, an abnormality of the equipment may not be accurately detected only by the magnitude or the frequency of the operational sound. On the other hand, the acoustic diagnosis device 1 according to an embodiment of the present invention specifies an abnormal part of the equipment A also in consideration of the operating conditions of the equipment A, and thus it is possible to accurately specify the abnormal part of the equipment A. Examples

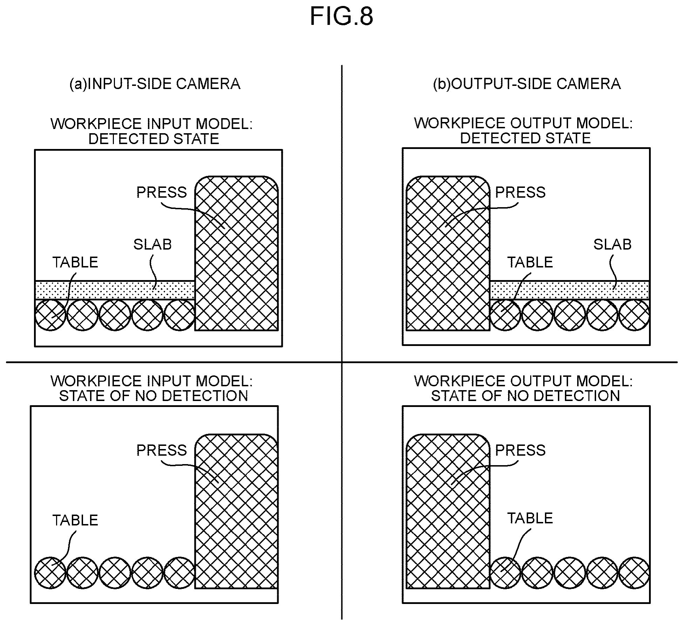

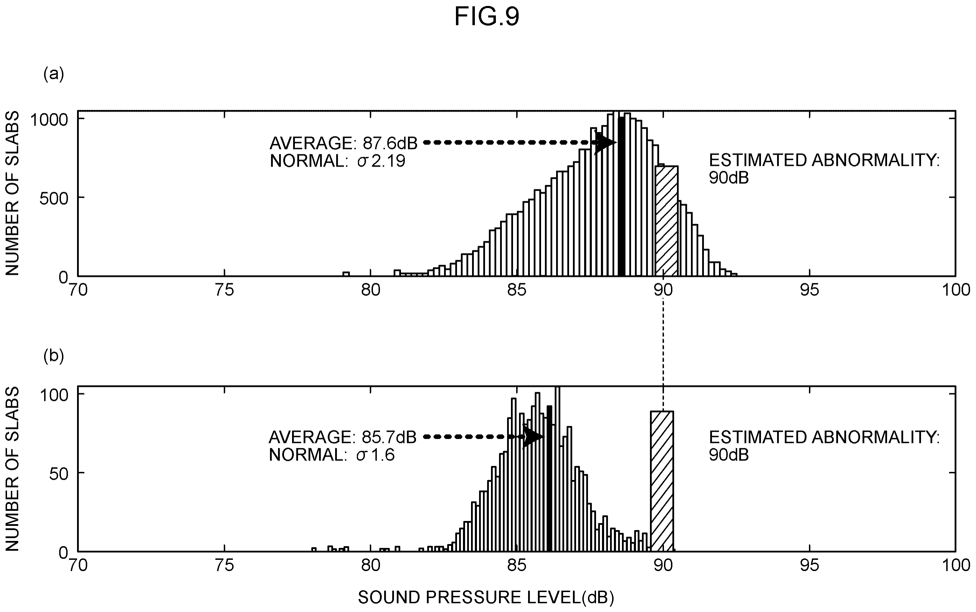

In the present example, an abnormal part of press equipment was specified. With an acoustic sensor installed around the press equipment, a spectrum of impact sound can be acquired at the moment when a press load is generated, and operational sound of a conveyor can be acquired during operation of the conveyor after the press is completed. In addition, by installing cameras on the input side and the output side of the press equipment, it is possible to collect an image when a slab enters the press equipment and an image when the slab leaves the press equipment as illustrated in FIGS. 8(a) and 8(b). In the present embodiment, the time when the workpiece has entered the press equipment and the time when the workpiece has left the press equipment were detected by inputting the images illustrated in FIGS. 8(a) and 8(b) to the artificial intelligence model. Furthermore, the range of the frequency distribution of the sound pressure level during normal operation of the press equipment was narrowed by considering operating conditions of the press equipment, whereby an abnormal part of the press equipment was specified. FIG. 9(a) is a graph showing a frequency distribution (average value of 87.6 dB and standard deviation of $\sigma 2.19$) of the sound pressure level in a case where the operating conditions of the press equipment are limited, and FIG. 9(b) is a graph showing a frequency distribution (average value of 85.7 dB and standard deviation of $\sigma 1.6$) of the sound pressure level in a case where the operating conditions of the press equipment are not limited.

Next, the degree of deviation of the press equipment in a case where the sound pressure level was 91 dB was calculated assuming a mold abnormality. The degree of deviation of the press equipment was calculated using the following Equation (2). As a result, in the case where the operating conditions were not limited, the degree of deviation of the press equipment when the sound pressure level was 91 dB was calculated to be 1.5, and in the case where the operating conditions were limited, the degree of deviation of the press equipment when the sound pressure level was 91 dB was calculated to be 3.3. Therefore, setting the threshold value, of the degree of deviation for determining that an abnormality has occurred in the press equipment, to 3 makes it possible to accurately determine an abnormality in the press equipment. In addition, by searching for a deviation pattern similar to a deviation pattern calculated from the deviation pattern registered in advance, it was possible to accurately determine that the abnormal part of the equipment

was the mold.

$$\text{Degree of Deviation} = \frac{\left(\begin{array}{c}\text{Monitoring Target Value} \ - \\ \text{Average Value during Normal Operation}\end{array}\right)}{\text{Standard Deviation during Normal Operation}^2}$$

$$\cdots (2)$$

Although the embodiments applied with the invention devised by the present inventors have been described above, the present invention is not limited by the description and the drawings included as a part of the disclosure of the present invention according to the embodiments. That is, other embodiments, examples, operation technology, and the like implemented by those skilled in the art on the basis of the present embodiments are all included in the scope of the invention.

Industrial Applicability

According to the present invention, it is possible to provide an acoustic diagnosis device and an acoustic diagnosis method capable of accurately specifying an abnormal part of equipment.

Reference Signs List

| 1 | ACOUSTIC DIAGNOSIS DEVICE |
| 11 | OPERATIONAL SOUND COLLECTING UNIT |
| 12 | IN-OPERATIONAL-SEGMENT OPERATIONAL SOUND EXTRACTING UNIT |
| 13 | NORMAL SOUND PRESSURE LEVEL ACQUIRING UNIT |
| 14 | NORMAL DISTRIBUTION DETERMINING AND RECORDING UNIT |
| 15 | SOUND PRESSURE LEVEL ACQUIRING UNIT |
| 16 | DEGREE-OF-DEVIATION CALCULATING UNIT |
| 17 | ABNORMAL PART SPECIFYING UNIT |
| 18 | DATABASE UNIT |
| 18a | EXTRACTION CONDITIONS DATABASE |
| 18b | FREQUENCY BAND DATABASE |
| 18c | NORMAL DISTRIBUTION DATABASE |
| 18d | OPERATING CONDITIONS DATABASE |
| 18e | DEVIATION PATTERN DATABASE |
| 20 | ACOUSTIC SENSOR |
| A | DIAGNOSIS TARGET EQUIPMENT |

**Claims**

1. An acoustic diagnosis device that specifies an abnormal part of equipment using an acoustic signal during operation of the equipment, the acoustic diagnosis device comprising:

an operational sound collecting unit that collects operational sound of the equipment;
an in-operational-segment operational sound extracting unit that collects an image indicating an operational state of the equipment, detects predetermined operational segments of the equipment using the collected image, and extracts operational sound for each of the operational segments detected from the operational sound collected by the operational sound collecting unit;
a sound pressure level acquiring unit that acquires a sound pressure level for each of predetermined frequency bands for each of the operational segments with respect to operational sound for each of the operational segments extracted by the in-operational-segment operational sound extracting unit;
a degree-of-deviation calculating unit that calculates a degree of deviation of the sound pressure level for each of the operational segments and each of the frequency bands acquired by the sound pressure level acquiring unit from a sound pressure level of the same equipment, a same operational segment, and a same frequency band during normal operation; and

an abnormal part specifying unit that specifies an abnormal part of the equipment on a basis of the degree of deviation calculated by the degree-of-deviation calculating unit.

2. The acoustic diagnosis device according to claim 1, wherein the in-operational-segment operational sound extracting unit detects a predetermined operational segment of the equipment by using an image indicating an operational state of the equipment by inputting the image indicating the operational state of the equipment acquired using an image sensor to an artificial intelligence model in which the image indicating the operational state of the equipment is used as input data and an operational state of the equipment indicated by the image is used as output data.

3. The acoustic diagnosis device according to claim 1 or 2,

wherein the sound pressure level acquiring unit acquires the sound pressure level by classifying each of operational sounds on a basis of predetermined operating conditions of the equipment, and
the degree-of-deviation calculating unit calculates the degree of deviation of the sound pressure level for each of the operational segments, each of the frequency bands, and each of the operating conditions acquired by the sound pressure level acquiring unit from a sound pressure level of the same equipment, the same operational segment, the same frequency band, and a same operating condition during the normal operation.

4. The acoustic diagnosis device according to claim 3, further comprising

a database unit that stores:

an extraction condition for the operational sound of the equipment; and
data necessary for specifying the abnormal part of the equipment,

wherein the abnormal part specifying unit specifies the abnormal part of the equipment on a basis of a pattern of deviations stored in the database unit, the pattern of deviations including, as an element, a degree of deviation in each frequency band obtained for each of the operational segments.

5. The acoustic diagnosis device according to any one of claims 1 to 4, further comprising:

a normal sound pressure level acquiring unit that acquires a sound pressure level for each of predetermined frequency bands for each of the operational segments with respect to the operational sound for each of the operational segments extracted by the in-operational-segment operational sound extracting unit; and
a normal distribution determining and recording unit that classifies the sound pressure level acquired by the normal sound pressure level acquiring unit for each of the equipment, each of the operational segments, and each of the frequency bands and records the classified sound pressure level as a sound pressure level during the normal operation of the equipment.

6. The acoustic diagnosis device according to claim 5, wherein the normal distribution determining and recording unit records, for each of the equipment, a table including information indicating a relationship between: the pattern of deviations; and the abnormal parts of the equipment, the pattern of deviations having, as an element, a degree of deviation of a sound pressure level from the sound pressure level during the normal operation in each of the frequency bands obtained for each of the operational segments.

7. The acoustic diagnosis device according to claim 6, wherein the normal distribution determining and recording unit records a table including information indicating a relationship between:

the operational segments, the pattern of deviations, and the operating conditions of the equipment; and
the abnormal parts of the equipment.

8. An acoustic diagnosis method for specifying an abnormal part of equipment using an acoustic signal during operation of the equipment, the acoustic diagnosis method comprising:

an operational sound collecting step of collecting operational sound of the equipment;
an in-operational-segment operational sound extracting step of collecting an image indicating an operational state of the equipment, detecting predetermined operational segments of the equipment using the collected image, and extracting operational sound for each of the operational segments detected from the operational sound collected in the operational sound collecting step;
a sound pressure level acquiring step of acquiring a sound pressure level for each of predetermined frequency bands for each of the operational segments with respect to operational sound for each of the operational segments extracted in the in-operational-segment operational sound extracting step;
a degree-of-deviation calculating step of calculating a degree of deviation of the sound pressure level for each of the operational segments and each of the frequency bands acquired in the sound pressure level acquiring step from a sound pressure level of the same equipment, a same operational segment, and a same frequency band during normal operation; and
an abnormal part specifying step of specifying an abnormal part of the equipment on a basis of the degree of deviation calculated in the degree-of-deviation calculating step.

9. The acoustic diagnosis method according to claim 8, further comprising:

a normal sound pressure level acquiring step of acquiring a sound pressure level for each of predetermined frequency bands for each of the operational segments with respect to the operational sound for each of the operational segments extracted in the in-operational-segment operational sound extracting step; and
a normal distribution determining and recording step of classifying the sound pressure level acquired in the normal sound pressure level acquiring step for each of the equipment, each of the operational segments, and each of the frequency bands and recording the classified sound pressure level as a sound pressure level during the normal operation of the equipment.

10. The acoustic diagnosis method according to claim 8 or 9, wherein the in-operational-segment operational sound extracting step includes a step of detecting a predetermined operational segment of the equipment by using an image indicating an operational state of the equipment by inputting the image indicating the operational state of the equipment acquired using an image sensor to an artificial intelligence model in which the image indicating the operational state of the equipment is used as input data and an operational state of the equipment indicated by the image is used as output data.

# FIG.1

ACOUSTIC DIAGNOSIS DEVICE — 1

- DIAGNOSIS TARGET EQUIPMENT — A
- ACOUSTIC SENSOR — 20
- IMAGE SENSOR — 21
- OPERATIONAL SOUND COLLECTING UNIT — 11
- IN-OPERATIONAL-SEGMENT OPERATIONAL SOUND EXTRACTING UNIT — 12
- SOUND PRESSURE LEVEL ACQUIRING UNIT — 15
- NORMAL SOUND PRESSURE LEVEL ACQUIRING UNIT — 13
- DEGREE-OF-DEVIATION CALCULATING UNIT — 16
- NORMAL DISTRIBUTION DETERMINING AND RECORDING UNIT — 14
- ABNORMAL PART SPECIFYING UNIT — 17

DATABASE UNIT — 18

- EXTRACTION CONDITIONS DATABASE — 18a
- FREQUENCY BAND DATABASE — 18b
- NORMAL DISTRIBUTION DATABASE — 18c
- OPERATING CONDITIONS DATABASE — 18d
- DEVIATION PATTERN DATABASE — 18e

EP 4 700 344 A1

13

# FIG.2

DATA
RECORDING
PROCESSING

↓

| COLLECT OPERATIONAL SOUND AND OPERATIONAL IMAGE | ~S1 |

↓

| EXTRACT OPERATIONAL SOUND | ~S2 |

↓

| ACQUIRE SOUND PRESSURE LEVEL OF NORMAL OPERATIONAL SOUND | ~S3 |

↓

| RECORD SOUND PRESSURE LEVEL DISTRIBUTION OF NORMAL OPERATIONAL SOUND AND CHARACTERISTIC AMOUNT OF SOUND PRESSURE LEVEL DISTRIBUTION | ~S4 |

↓

END

# FIG.3

(a)

WORKPIECE → EQUIP-MENT    CONVEYOR

REDUCER + MOTOR

21    20    1

(b)

IMAGE 1
TRAVELING DIRECTION
→
WORK-PIECE    EQUIP-MENT

BEFORE DETECTION OF OPERATION

IMAGE 2
TRAVELING DIRECTION
→
WORK-PIECE  EQUIP-MENT

DETECTION OF OPERATION

(c)

OPERATIONAL SEGMENT 1    OPERATIONAL SEGMENT 2

LOAD(N) axis: 250, 200, 150, 100, 50, 0, -50

TIME(sec) axis: 0, 0.5, 1, 1.5

EQUIP-MENT

CONVEYOR

FREQUENCY(kHz) axis: 8.0, 4.0, 2.0, 1.0, 0.5, 0

SOUND PRESSURE LEVEL  HIGH  LOW

TIME(sec)

(d)

FREQUENCY BAND 1    FREQUENCY BAND 2    FREQUENCY BAND 3

SOUND PRESSURE LEVEL(dB) axis: 90, 85, 80, 75, 70, 65, 60, 55, 50

FREQUENCY(Hz) axis: $10^2$, $10^3$, $10^4$

FREQUENCY(Hz)

EP 4 700 344 A1

# FIG.4

(a)WORKPIECE ENTRY DETECTION

IMAGE 1

TRAVELING INLET
DIRECTION

WORKPIECE    EQUIP-
MENT

IMAGE 2

TRAVELING
DIRECTION

WORK-    EQUIP-
PIECE    MENT

(b)WORKPIECE OUTPUT DETECTION

IMAGE 3

OUTLET
TRAVELING
DIRECTION

EQUIP-    WORK-
MENT    PIECE

IMAGE 4

TRAVELING
DIRECTION

EQUIP-
MENT    WORKPIECE

EP 4 700 344 A1

# FIG.5

START

ACQUIRE IMAGE ⟲S21

WORKPIECE ENTRY DETECTED? ⟲S22 — NO → TURN OFF TRIGGER ⟲S24

YES ↓ ⟲S23

TURN ON TRIGGER

ACQUIRE IMAGE ⟲S25

WORKPIECE OUTPUT DETECTED? ⟲S26 — NO

YES ⟲S27

TURN OFF TRIGGER

END

# FIG.6

ABNORMAL PART
SPECIFYING
PROCESSING

COLLECT OPERATIONAL SOUND
AND OPERATIONAL IMAGE — S11

EXTRACT OPERATIONAL SOUND — S12

ACQUIRE SOUND PRESSURE
LEVEL FOR EACH FREQUENCY
BAND — S13

CALCULATE DEGREE OF
DEVIATION FROM SOUND
PRESSURE LEVEL DISTRIBUTION
OF NORMAL OPERATIONAL SOUND — S14

SPECIFY ABNORMAL PART — S15

END

# FIG.7

(a)

| FREQUENCY BAND | OPERA-TIONAL SEGMENT 1 (y') |
|---|---|
| 125Hz | 0 |
| 250Hz | 0 |
| 500Hz | 0 |
| 1,000Hz | 0 |
| 2,000Hz | 0 |
| 4,000Hz | 1 |
| ABNORMAL PART | COMPO-NENT B |

OBTAINED DEVIATION PATTERN y'

(b)

| FREQUENCY BAND | OPERA-TIONAL SEGMENT 1 (y1) | OPERA-TIONAL SEGMENT 1 (y2) | OPERA-TIONAL SEGMENT 1 (y3) | ... | OPERA-TIONAL SEGMENT k (yn-1) | OPERA-TIONAL SEGMENT k (yn) |
|---|---|---|---|---|---|---|
| 125Hz | 1 | 0 | 0 | | 0 | 0 |
| 250Hz | 0 | 0 | 0 | | 0 | 0 |
| 500Hz | 0 | 0 | 0 | | 0 | 0 |
| 1,000Hz | 0 | 0 | 0 | | 1 | 0 |
| 2,000Hz | 0 | 0 | 0 | | 1 | 0 |
| 4,000Hz | 0 | 1 | 0 | | 1 | 0 |
| ABNORMAL PART | COMPO-NENT A | COMPO-NENT B | NO ABNOR-MALITY | | COMPO-NENT C | NO ABNOR-MALITY |

PRE-REGISTERED DEVIATION PATTERN $y_k$

# FIG.8

(a)INPUT-SIDE CAMERA

WORKPIECE INPUT MODEL:
DETECTED STATE

PRESS

SLAB

TABLE

WORKPIECE INPUT MODEL:
STATE OF NO DETECTION

PRESS

TABLE

(b)OUTPUT-SIDE CAMERA

WORKPIECE OUTPUT MODEL:
DETECTED STATE

PRESS

SLAB

TABLE

WORKPIECE OUTPUT MODEL:
STATE OF NO DETECTION

PRESS

TABLE

# FIG.9

(a)

AVERAGE: 87.6dB
NORMAL: σ2.19

ESTIMATED ABNORMALITY:
90dB

(b)

AVERAGE: 85.7dB
NORMAL: σ1.6

ESTIMATED ABNORMALITY:
90dB

SOUND PRESSURE LEVEL(dB)

EP 4 700 344 A1

## INTERNATIONAL SEARCH REPORT

International application No.

**PCT/JP2024/018926**

| | |
|---|---|
| **A.   CLASSIFICATION OF SUBJECT MATTER** | |

*G01H 17/00*(2006.01)i; *G01M 99/00*(2011.01)i
FI:   G01H17/00 C; G01M99/00 Z

According to International Patent Classification (IPC) or to both national classification and IPC

**B.     FIELDS SEARCHED**

Minimum documentation searched (classification system followed by classification symbols)

G01H1/00-17/00; G01M13/00-13/045; G01M99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| A | JP 2017-32488 A (RICOH COMPANY, LTD.) 09 February 2017 (2017-02-09)<br>     paragraphs [0009]-[0014], fig. 1-4 | 1-10 |
| A | JP 2022-86643 A (TOPPAN PRINTING CO., LTD.) 09 June 2022 (2022-06-09)<br>     paragraphs [0019]-[0049], fig. 1-3 | 1-10 |
| A | JP 2013-19741 A (TOYOTA MOTOR EAST JAPAN INC.) 31 January 2013 (2013-01-31)<br>     paragraphs [0026]-[0055], fig. 1-4 | 1-10 |
| A | JP 2021-148457 A (JTEKT CORP.) 27 September 2021 (2021-09-27)<br>     paragraphs [0010]-[0076], fig. 1-6 | 1-10 |
| A | CN 115200699 A (CHINA CONSTRUCTION SEVENTH ENGINEERING DIVISION<br>CORP. LTD.) 18 October 2022 (2022-10-18)<br>     paragraphs [0055]-[0063], fig. 1 | 1-10 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 July 2024** | **13 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/018926**

| Patent document cited in search report | | | Publication date (day/month/year) | Patent family member(s) | Publication date (day/month/year) |
|---|---|---|---|---|---|
| JP | 2017-32488 | A | 09 February 2017 | (Family: none) | |
| JP | 2022-86643 | A | 09 June 2022 | (Family: none) | |
| JP | 2013-19741 | A | 31 January 2013 | (Family: none) | |
| JP | 2021-148457 | A | 27 September 2021 | (Family: none) | |
| CN | 115200699 | A | 18 October 2022 | (Family: none) | |

Form PCT/ISA/210 (patent family annex) (July 2022)

**EP 4 700 344 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008164490 A
- WO 2019017345 A
- WO 2020157818 A